Europäisches Patentamt

European Patent Office

Office européen des brevets

(11) Publication number: **0 154 559**
A2

## (12) EUROPEAN PATENT APPLICATION

(21) Application number: **85301587.3**

(22) Date of filing: **07.03.85**

(51) Int. Cl.⁴: **C 22 F 1/18**
**G 21 C 3/20**

(30) Priority: **08.03.84 JP 44572/84**

(43) Date of publication of application:
**11.09.85 Bulletin 85/37**

(84) Designated Contracting States:
**DE FR GB SE**

(71) Applicant: **HITACHI, LTD.**
**6, Kanda Surugadai 4-chome Chiyoda-ku**
**Tokyo 100(JP)**

(72) Inventor: **Inagaki, Masahisa**
**1262-31 Ishinazaka-cho**
**Hitachi-shi Ibaraki-ken(JP)**

(72) Inventor: **Imahashi, Hiromichi**
**3-15-22 Taga-cho**
**Hitachi-shi Ibaraki-ken(JP)**

(72) Inventor: **Akahori, Kimihiko**
**3-12-10 Sasano-cho**
**Katsuta-shi Ibaraki-ken(JP)**

(72) Inventor: **Maki, Hideo**
**1166-58 Inada**
**Katsuta-shi Ibaraki-ken(JP)**

(74) Representative: **Paget, Hugh Charles Edward et al,**
**MEWBURN ELLIS & CO. 2/3 Cursitor Street**
**London EC4A 1BQ(GB)**

(54) Zirconium-base alloy structural member and process for its preparation.

(57) A zirconium-base alloy structural member, wherein at least one element selected from phosphours, vanadium, niobium, tantalum, arsenic, antimony, bismuth, sulfur, chromium, molybdenum, tungsten, selenium, tellurium and polonium is distributed on a surface of said member, particularly to a fuel covering tube or spacer for nuclear fuel assembly which is contained the element in a surface oxide layer. The final cold-rolled fuel covering tube is produced by the steps of annealing and coating with the element in the surface oxide layer. The spacer is produced by a step of coating with the element in the surface oxide layer. A process for preparation of a zirconium-base alloy structural member includes, in addition to subjecting a zirconium-base alloy to a final plastic working step, a step of coating its surface with the element. There can be obtained a zirconium-base alloy structural member exhibiting a high corrosion resistance and having a high ductility.

Title of the Invention:

ZIRCONIUM-BASE ALLOY STRUCTURAL MEMBER AND PROCESS

FOR ITS PREPARATION

The present invention relates to a zirconium-base alloy structural member and process for its preparation, particularly to a zirconium-base alloy structural member which is suitable especially for use in water at a high temperature and a high pressure, such as in a nuclear reactor, and a process for its preparation.

Zirconium-base alloys (alloys based on zirconium) have been used to produce structural members for a nuclear reactor, for example, structural members of a nuclear fuel assembly, such as fuel covering tube, channel box, spacer or water rod, because they have a good corrosion resistance and a small neutron absorption cross section.

Known zirconium-base alloys suitable for use include Zircalloy-2 (Sn: about 1.5% by weight, Fe: about 0.15%, Cr: about 0.1%, Ni: about 0.05%, Zr: the balance), Zircalloy -4 (Sn: about 1.5%, Fe: about 0.2%, Cr: about 0.1%, Zr: the balance) and a zirconium/2.5% niobium alloy (Nb: 2.5%, Zr: the balance).

Zirconium alloys have a good corrosion resistance. However, when exposed to water at high temperature and high pressure in a nuclear reactor for a long time, they tend to locally form papulous corrosions (hereinafter referred to as "nodular corrosion") by oxidation, so that the thickness of normal parts decreases to cause the lowering of strength. Furthermore, if nodular corrosions penetrate the entire thickness of a fuel covering tube, radioactive materials in the tube will leak into reactor water. Accordingly, it is necessary to improve the corrosion resistance of a zirconium-base alloy to enhance combustion efficiency of nuclear fuels and lengthen the operating cycle.

It is well known to improve the corrosion resistance of Zircalloy-2 or -4 by a heat treatment which is called "ß-quench". (United States Patent 4,238,251). According to this method, a zirconium-base alloy is heated to a temperature range within which the ß-phase begins to be formed (above about 840°C) and rapidly cooled with water or a gas to redistribute deposits [$Zr(Cr,Fe)_2$ and $Zr_2(Ni,Cr)$ or $Zr_2(Ni,Fe)$] on the grain boundary of particles selectively.

However, a zirconium-base alloy having such a metallic configuration has a remarkably low ductility, so that it tends to crack in a strong processing after ß-quench. On the other hand, if this alloy is subjected to hot processing or annealing to enable a strong processing, the highly corrosion-resistant metallic configuration will change, resulting in the lowering of corrosion resistance.

In contrast, zirconium/2.5% niobium alloy is a deposition-set alloy having a good ductility, an excellent corrosion resistance and a high strength, but the welded area of this alloy exhibits a low corrosion resistance which can not be improved by the β-quench method.

As described above, up to this time, it has been difficult to produce a zirconium-base alloy structural member which is excellent in both ductility and corrosion resistance.

The invention aims at least partly to overcome this difficulty.

The invention is set out in the claims.

By the present invention it is possible to provide a zirconium-base alloy structural member which does not form or has a reduced tendency to form nodular corrosions when used in water or steam at a high temperature and a high pressure for a long time and have a sufficient ductility.

It is also possible by the present invention to provide a zirconium-base alloy structural member which suffers less oxidation.

preparation.

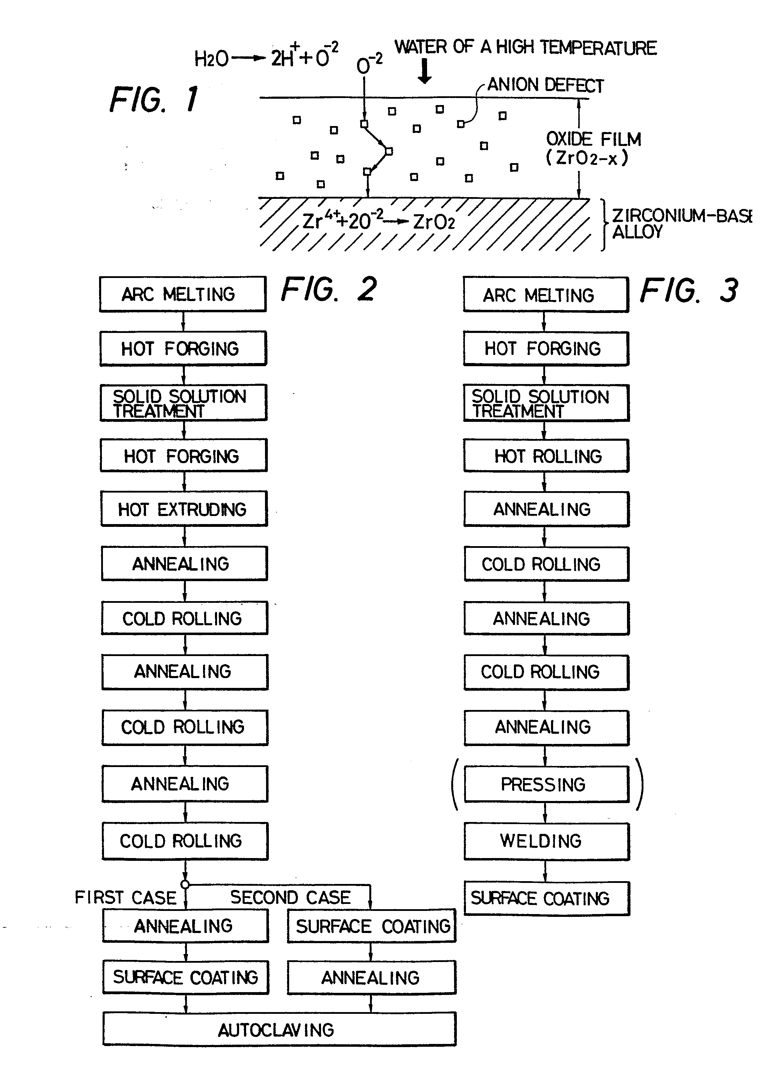

The growth mechanism of a zirconium alloy oxide layer on the surface of a zirconium-base alloy is shown schematically in Figure 1. This oxide layer consists of a metal-excessive (oxygen-difficient) n-type semiconductor and its composition is $ZrO_2-x$, which deviates from a stoichiometric composition. The excess metal ions are compensated by equivalent electrons to keep the oxide layer electrically neutral, and the oxygen-deficient parts are present in the oxide layer as anion defects.

External oxygen ions are diffused into the inside of the alloy by occupying the positions of the anion defects and bonded to zirconium on the interface between the oxide layer and the metal, so that oxidation proceeds toward the inside. The growth rate of the oxide layer is determined by the diffusion rate of oxygen, and the diffusion rate of oxygen is proportional to the number and mobility of anion defects in the oxide layer. Accordingly, reduction in the number of anion defects is thought to be effective in depressing the oxidation and enhancing the corrosion resistance.

On the basis of the consideration described above, the inventors of the present invention have found that when elements which can produce a cation of a valence of at least 5 are added to the lattice positions of $Zr^{4+}$ in the oxide layer of a zirconium-base alloy, the elements act as electron donors to decrease the number of anion defects, thus enhancing the corrosion resistance. That is to say, it has been found that the addition of an element of Group V or VI is effective on the surface or the surface layer of zirconium-base alloy. The elements of Group V or VI form oxides of $M_2O_5$ or $MO_3$ type (where M is an element as described above).

From the standpoint of enhancing the corrosion resistance, it is effective to add these elements as alloy-forming elements into a molten zirconium-base alloy. However, since these elements have a larger neutron absorption cross section than zirconium, they will affect adversely the reactivity of a nuclear reactor. Thus, according to the present invention, these elements should be distributed only on the surface or only in the surface layer of a zirconium-base alloy structural member.

According to the present invention, the element may be present on the surface of a zirconium-base alloy by coating the surface with the element or may be contained in the surface layer by alloying the surface layer with the element. Additionally, they may be contained in the surface oxide layer.

The zirconium-base alloy structural member according to the present invention can be produced by the following procedures: A zirconium alloy is subjected to the final plastic working and its surface is coated with an element described above, optionally followed by heating the coated product or by subjecting the coated product to autoclaving.

Examples of elements of Group V include phosphorus, vanadium, niobium, tantalum, arsenic, antimony and bismuth, which those of Group VI include sulfur, chromium, molybdenum, tungsten, selenium tellurium and polonium. In the present invention, the element added can be one or more elements of above examples of elements of Group V or VI.

The surface of a zirconium-base alloy structural member, such as a fuel covering tube or spacer, can be coated not only by vacuum metallizing or CVD (Chemical Vapor Deposition) method, but also by other suitable coating methods. For example, in the CVD method which comprises mixing $WCl_6$ with $H_2$ and depositing tungsten on the surface in an oven by the reaction:

$$WCl_6 + 3H_2 \rightarrow W + 6HCl$$

a glow discharge may be applied using a chamber as a cathode and a zirconium-base alloy structural member as an anode to accelerate the above reaction.

Furthermore, the ions of elements may be distributed in the surface layer of a zirconium-base alloy structural member by ion implantation wherein the ions are accelerated and implanted into the member.

The zirconium-base alloy structural member of the present invention is used for a nuclear reactor, for example, structural members of a nuclear fuel assembly, such as fuel covering tube, channel box, spacer or water rod.

The zirconium-base alloy suitable for use as such a member may be selected from a group consisting of Zircalloy-2, Zircalloy-4 and zirconium/2.5% niobium.

There can be obtained by the invention a zirconium-base alloy structural member exhibiting a high corrosion resistance even in water or steam at a high temperature and a high pressure and having a high ductility. The structural member is used as a structural member for a nuclear fuel assembly, and it can exhibit a long life in the reactor and enhance the combustion efficiency of the fuel.

The structural member of the invention can be plastically worked as usual without affecting the elongation adversely, because it does not contain any corrosion resistance-enhancing elements at the plastic working step.

The structural member of the invention has also an advantage in that it is used as a structural member in a nuclear reactor, the neutron absorption power of the member does not substantially increase, because it contains the elements only on the surface or in the surface layer.

Examples of the invention are given below, with reference to the drawings, in which:-

Figure 1 is a figure illustrating the growth mechanism of the surface oxide film of a zirconium-base alloy.

Figure 2 is a flow chart of a production process of a fuel covering tube according to the present invention.

Figure 3 is a flow chart of production process of a fuel spacer according to the present invention.

Example 1

A tungsten (a metal of Group VI) film of a thickness of 0.1 to 0.01 μm was formed on part of the outer surface of a fuel covering tube made of Zircalloy-2 by vacuum metallizing. The resulting fuel covering tube was heated by raising its temperature for one hour, maintained at 600°C for 2 hours and cooled by decreasing its temperature for 40 minutes.

The obtained fuel covering tube was kept for 24 hours in steam at 500°C and 105 kgf/cm² (generally, this condition is said to be the best simulated corrosion condition in a nuclear reactor). The external appearance of the tube was observed.

Outside surface metallized with tungsten was covered with a black uniform oxide film, while the other part of the outside surface, which was not metallized with tungsten, was covered with a white papulous oxide film - this was produced by joining papulous nodular corrosions owing to the progress of the corrosions and looked white as a whole.
The black uniform oxide film formed on the outer surface
was a $ZrO_2$ film containing tungsten distributed in the ion
lattice of $ZrO_2$.

The fuel covering tube was subjected to vacuum metallizing
followed by heating so that tungsten penetrated into the tube,
and thus the surface layer of Zircalloy-2 was alloyed with
the tungsten.

The corrosion resistance and ductility of the fuel
covering tube made of Zircalloy-2 is definitely enhanced by
vacuum metallizing with tungsten followed by heating.

Example 2

In Example 2, a fuel covering tube made of Zircalloy-2
was vacuum metallized with tungsten without any heat treatment. And it was examined for corrosion resistance by keeping
it for 24 hours in steam at a temperature and pressure
similar to those of Example 1. On the part which had been
vacuum metallized with tungsten, a black uniform oxide film
was formed, but no nodular corrosion was observed. The fuel
covering tube made of Zircalloy-2 which was vacuum metallized
had a good corrosion resistance and good ductility.

Example 3

A fuel covering tube made of Zircalloy-2 was vacuum
metallized with tungsten as described in Example 1 and
subjected to autoclaving by keeping it for 17 hours in steam 385°C and 1.7 kgf/cm² to form a black uniform oxide layer of a thickness of about 1 µm on the surface of the tube. This layer was a strong oxide film consisting of tungsten-containing zirconium oxide. The obtained sample was examined for corrosion resistance according to the same procedure as described in Example 1. The sample had a good corrosion resistance and a good ductility.

Example 4

A fuel covering tube made of Zircalloy-2 was produced according to the process shown in Figure 2. An arc-molten ingot was forged at a temperature of 1000 to 1050°C into a column and the column was subjected to a solid solution treatment by rapidly cooling with water and hot-forged at 750 to 800°C into a longer and slenderer column. The obtained column was excavated and machined to form a cylinder having a desired size. The cylinder was extruded at 700 to 800°C to form a tube having an external radius of 63.5 mm and a thickness of 10 mm (hereinafter referred to as "hot-extruded crude tube").

The hot-extruded crude tube was worked by repeating the procedure comprising annealing at 550 to 750°C and cold-rolling by a pilger mill having a reduction ratio of sectional area of about 70% three times to form a tube having an external radius of 12.5 mm and a thickness of 0.9 mm (hereinafter, referred to as "final cold-rolled tube").

The final cold-rolled tubes were treated according to two procedures. In the first case, a final cold-rolled tube was annealed at 577°C for 2 hours, washed with a mixture consisting of hydrofluoric acid, nitric acid and water, neutralized and washed with water. The surface of the tube was vacuum metallized with tungsten.

On the other hand, in the second case, a final cold-rolled tube was washed with a mixture of hydrofluoric acid, nitric acid and water, neutralized and washed with water as in the first case. The surface of the obtained tube was vacuum metallized with tungsten and the tube was annealed at 577°C for 2 hours.

In the final step of both cases, the tubes were subjected to autoclaving according to the same procedure as described in Example 3 to form an oxide film on the surface of the tubes. The obtained tubes were examined for corrosion resistance according to the same procedure as described in Example 1. It was confirmed that the tubes treated according to either of the first and the second cases have an improved corrosion resistance.

Example 5

A spacer made of Zircalloy-4 for a nuclear fuel assembly comprises spacer bands, lattice spacer bars, spacer dividers and spacer spring. Each lattice point was welded by resistance welding.

The spacer described was produced according to the process shown in Figure 3. An arc-molten ingot of Zircalloy-4 was rectangularly hot-forged, subjected to a solid solution treatment and hot-rolled to form a plate of a thickness of 2.0 mm. This plate was worked by repeating the procedure comprising cold-rolling and annealing twice to form a plate of a thickness of 0.78 mm. The temperature of the annealing after the first cold-rolling was from 650 to 750°C, while that of the second annealing was 577°C.

This plate was cut to produce spacer bands and spacer bars. The spacer bands were press molded to form a plate having unevenesses. The resulting spacer bands and spacer bars were set up and resistance welded to form an intermediate product having a configuration of a spacer. The surface of the intermediate product was coated with tungsten in an oven of 600°C by CVD method. The reactant gas used in this method comprised $WCl_6$ and $H_2$. The thickness of the tungsten film formed on the surface was below 0.1 μm.

The obtained spacer was examined for corrosion resistance according to the same procedure as described in Example 1. The surface of the spacer was covered with a black uniform oxide layer and no nodular corrosions were observed. The spacer had a good corrosion resistance and a good ductility.

The above Examples illustrate the cases where tungsten was added, but the present invention is not limited to the cases. The corrosion resistance and ductility enhancing effect similar to the Examples can be obtained by adding one or more of elements of Group V or VI to surface or surface layer i.e., by distributing or coating the surface with the elements, by alloying the surface layer with the elements, or by allowing the elements to be contained in the surface oxide layer.

Comparative Example

A fuel covering tube was produced according to the same procedure shown in Figure 2, except that a procedure consisting of cold-rolling along with ß-quench consisting of heating at 1000°C for 5 seconds and cooling with water and annealing was repeated instead of the annealing after hot-extruding. The surface was not coated. The tensile properties of this ß-quench treated tube and the tube of Example 4 are shown in the following Table.

Table

| | Tensile strength ($kgf/mm^2$) | 0.2% proof strength ($kgf/mm^2$) | Elongation (%) |
|---|---|---|---|
| ß-quench treated tube | 59.7 | 44.3 | 28.5 |
| The tube of this invention | 55.8 | 42.0 | 35.0 |

From the above Table, it should be understood that a

β-quench treated tube exhibits only a low tensile strength but is excellent in tensile strength and 0.2% proof strength, while the tube according to the present invention has a sufficient high elongation and is sufficient for use in tensile strength and proof strength. As described above, it is clear that the covering tube of the present invention has a higher ductility or elongation than the β-quench treated tube and a corrosion resistance equal to that of the β-quench treated tube.

CLAIMS

1. A zirconium-base alloy structural member, wherein at least one element selected from phosphorus, vanadium, niobium, tantalum, arsenic, antimony, bismuth, sulfur, chromium, molybdenum, tungsten, selenium, tellurium and polonium is distributed on a surface of said member and/or in a surface layer thereof.

2. A zirconium-base alloy structural member according to claim 1, wherein said element is coated on a surface of said member.

3. A zirconium-base alloy structural member according to claim 1, wherein an alloy of said element is present in a surface layer of said member.

4. A zirconium-base alloy structural member according to claim 1, wherein said element is contained in a surface oxide layer of said member.

5. A zirconium-base alloy structural member according to claim 4, wherein said member is a fuel covering tube and the zirconium-base alloy is selected from

. Zircalloy-2, Zircalloy-4 and zirconium/2.5% niobium alloy.

6. A zirconium-base alloy structural member according to claim 4, wherein said member is a spacer for a nuclear fuel assembly and zirconium-base alloy is selected from

Zircalloy-2, Zircalloy-4 and zirconium/2.5% niobium alloy.

7.    A zirconium-base alloy structural member according to claim 5, wherein said fuel covering tube containing in said surface oxide layer is heat-treated.

8.    A zirconium-base alloy structural member according to claim 5, wherein said fuel covering tube containing in said surface oxide layer is autoclaved.

9.    A zirconium-base alloy structural member according to claim 5, wherein said fuel covering tube is final cold-rolled tube and said final cold-rolled tube is annealed and after is coated with said element in said surface oxide layer and further is subjected to autoclaving.

10.    A zirconium-base alloy structural member according to claim 5, wherein said fuel covering tube is final cold-rolled tube and said final cold-rolled tube is coated with said element in said surface oxide layer and after is annealed and further is subjected to autoclaving.

11.    A process for the preparation of a zirconium-base alloy structural member including; in addition to subjecting a zirconium-base alloy to a final plastic working step, a step of coating its surface with at least one element selected from  phosphorus, vanadium, niobium, tantalum, arsenic, antimony, bismuth, sulfur, chromium, molybdenum, tungsten, selenium, tellurium and polonium.

12.    A process for the preparation of a zirconium-base alloy structural member according to claim 11 including; a step of heat-treating said coated product to alloy said element to a surface layer of said coated product.

13. A process for the preparation of a zirconium-base alloy structural member according to claim 11 including; a step of subjecting said coated product to autoclaving to form an oxide layer on its surface.

14. A process for the preparation of a zirconium-base alloy structural member according to claim 11, wherein said member is a fuel covering tube and zirconium-base alloy is selected from Zircalloy-2, Zircalloy-4 and zirconium/2.5% niobium alloy.

15. A process for preparation of a zirconium-base alloy structural member according to claim 11, wherein said member is a spacer for nuclear fuel assembly and zirconium-base alloy is selected from Zircalloy-2, Zircalloy-4 and zirconium/2.5% niobium alloy.

0154559

**FIG. 1**

$H_2O \longrightarrow 2H^+ + O^{-2}$

$O^{-2}$ WATER OF A HIGH TEMPERATURE

ANION DEFECT

OXIDE FILM ($ZrO_{2-x}$)

$Zr^{4+} + 2O^{-2} \longrightarrow ZrO_2$

ZIRCONIUM-BASE ALLOY

**FIG. 2**

ARC MELTING

↓

HOT FORGING

↓

SOLID SOLUTION TREATMENT

↓

HOT FORGING

↓

HOT EXTRUDING

↓

ANNEALING

↓

COLD ROLLING

↓

ANNEALING

↓

COLD ROLLING

↓

ANNEALING

↓

COLD ROLLING

↓

FIRST CASE ○ ─── SECOND CASE

| ANNEALING | SURFACE COATING |

| SURFACE COATING | ANNEALING |

AUTOCLAVING

**FIG. 3**

ARC MELTING

↓

HOT FORGING

↓

SOLID SOLUTION TREATMENT

↓

HOT ROLLING

↓

ANNEALING

↓

COLD ROLLING

↓

ANNEALING

↓

COLD ROLLING

↓

ANNEALING

↓

( PRESSING )

↓

WELDING

↓

SURFACE COATING